(19) **Europäisches Patentamt / European Patent Office / Office européen des brevets**

(11) **EP 3 446 500 B1**

(12) **FASCICULE DE BREVET EUROPEEN**

(45) Date de publication et mention
de la délivrance du brevet:
**06.01.2021 Bulletin 2021/01**

(21) Numéro de dépôt: **17722107.4**

(22) Date de dépôt: **18.04.2017**

(51) Int Cl.:
*H04W 4/00* (2018.01)     *H04W 52/02* (2009.01)
*G01D 4/00* (2006.01)     *H04L 29/08* (2006.01)
*H04W 4/70* (2018.01)     *H04W 84/18* (2009.01)

(86) Numéro de dépôt international:
**PCT/FR2017/050913**

(87) Numéro de publication internationale:
**WO 2017/182749 (26.10.2017 Gazette 2017/43)**

(54) **TECHNIQUE DE RELEVAGE DE COMPTEURS ÉCONOMISANT DE L'ÉNERGIE AU NIVEAU DES COMPTEURS INTELLIGENTS**

VERFAHREN ZUM ABLESEN ENERGIESPARENDER ZÄHLER AUF DER EBENE EINES INTELLIGENTEN STROMZÄHLERS

TECHNIQUE FOR READING ENERGY-SAVING METERS AT THE SMART METER LEVEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2016 FR 1653504**

(43) Date de publication de la demande:
**27.02.2019 Bulletin 2019/09**

(73) Titulaire: **Kerlink**
**35235 Thorigne-Fouillard (FR)**

(72) Inventeurs:
- DELIBIE, Yannick
**35235 THORIGNE-FOUILLARD (FR)**

- GAUDIN, Yannick
**35235 THORIGNE-FOUILLARD (FR)**

(74) Mandataire: **Loyer & Abello**
**9, rue Anatole de la Forge**
**75017 Paris (FR)**

(56) Documents cités:
**FR-A1- 2 879 884     US-A1- 2009 225 811**

- Gregory T. Obenchain: "A Discussion of Smart Meters And RF Exposure Issues An EEI-AEIC-UTC White Paper A Joint Project of the EEI and AEIC Meter Committees", , 31 mars 2011 (2011-03-31), XP055302784, Extrait de l'Internet: URL:http://www.eei.org/issuesandpolicy/grid-enhancements/documents/smart_meters_rf_exposure.pdf [extrait le 2016-09-15]

## Description

## Domaine technique

L'invention se rapporte au domaine des procédés et dispositifs à très faible consommation d'énergie pour communiquer par radio des données, notamment dans le domaine de l'Internet des objets.

## Arrière-plan technologique

L'internet des objets consiste à permettre à des objets du quotidien de communiquer automatiquement des données avec un réseau sans-fil. Par exemple, un compteur d'eau équipé d'un module de communication peut automatiquement communiquer un relevé d'eau à l'entreprise de gestion de la facturation de la consommation d'eau.

Des passerelles, également appelées stations de base, ont pour rôle d'assurer la réception et l'émission radio de données en provenance et à destination des modules de communication présents dans leur zone de couverture ainsi que de relayer ces données à des équipements en charge de les traiter, par exemple des serveurs accessibles sur un réseau basé sur le protocole IP (« Internet Protocol »).

Plusieurs technologies d'accès radio sont disponibles pour la mise en œuvre de réseaux de modules de communication. On peut citer à titre purement illustratif et non limitatif les technologies LoRa™, Sigfox™ ou encore WM-Bus (de l'anglais « *Wireless Meter Bus* »), qui reposent notamment sur des types de modulation différents.

Ces technologies ont en commun de proposer des communications longue distance (dites « long range » en anglais) qui permettent de diminuer le nombre de passerelles en augmentant la couverture de celles-ci.

Cependant, l'émission et la réception en continue de données, notamment par des technologies longue distance précitées, consomme beaucoup d'énergie, ce qui limite la durée de vie des batteries des modules de communication et impose aux passerelles d'être alimentées sur le secteur.

La publication US-A-2009/0225811 divulgue une passerelle et un procédé selon le préambule des revendications 9 et 1.

## Résumé

L'invention est définie dans les revendications et permet de résoudre les problèmes de l'art antérieur.

Certains aspects de l'invention viennent de l'idée de faire fonctionner une passerelle sur batteries, par exemple pour rendre une passerelle mobile.

Certains aspects de l'invention viennent de l'idée d'économiser de l'énergie consommée par une passerelle afin d'augmenter la durée de vie des batteries alimentant la passerelle.

Certains aspects de l'invention viennent de l'idée de pouvoir télé-relever des données à bas coût.

Dans un mode de réalisation, l'invention fournit un procédé pour établir une communication entre une passerelle et un module de communication, comportant :

- radiodiffuser périodiquement dans des périodes de radiodiffusion successives depuis une passerelle un signal de synchronisation, le signal de synchronisation étant émis pendant une fenêtre d'émission présentant une durée Dx définie au sein de chaque période de radiodiffusion, le rapport cyclique DC=Dx/Tx entre la durée de la fenêtre d'émission Dx du signal de synchronisation et la durée de la période de radiodiffusion Tx étant inférieur à 50%,

- activer périodiquement dans des périodes d'activation successives un récepteur d'un module de communication, le récepteur étant activé pendant une fenêtre d'éveil au sein de chaque période d'activation, la durée de la fenêtre d'éveil étant inférieure à la durée Tr de la période d'activation, la durée Tr de la période d'activation étant égale à Tr=Tx/(1+DC),

- recevoir le signal radio de synchronisation par le récepteur du module de communication lors d'un recouvrement entre une dite fenêtre d'éveil et une dite fenêtre d'émission,

- radiodiffuser un message de données depuis un émetteur du module de communication, la radiodiffusion du message de données étant déclenchée par la réception du signal de synchronisation,

- recevoir le message de données par un récepteur de la passerelle.

Le signal de synchronisation est un signal de déclenchement de la radiodiffusion du message de données.

Grâce à ces caractéristiques, la passerelle et le module de communication peuvent être alimentés par des batteries dont la durée de vie est accrue, par exemple dont la durée de vie est 15 ans.

Grâce à ces caractéristiques, les horloges internes de la passerelle et du module de communication n'ont pas besoin d'être synchronisées par rapport à une date de référence commune. Par exemple, les horloges peuvent être imprécises. Il est donc possible d'utiliser des matériaux de bas coûts. En effet, la durée de convergence maximale est égale à :

$$Tc = Tx*(DC*(1+DC))^{-1}$$

ce qui signifie qu'un recouvrement entre une fenêtre d'éveil et une fenêtre d'émission lorsque le module de communication est dans la portée de la passerelle a nécessairement eu lieu au bout d'une durée inférieure ou égale à

$$Tc= Tx*(DC*(1+DC))^{-1}$$

à partir de la première émission du signal de synchronisation par la passerelle.

Dans un mode de réalisation, l'invention fournit une passerelle destinée à communiquer sans fil avec un module de communication comportant un récepteur présentant des fenêtres d'éveil successives répétées périodiquement avec une période de durée Tr, par exemple pour transmettre des données de ce module de communication vers un réseau, la passerelle comportant :

- une horloge configurée pour déclencher périodiquement une radiodiffusion d'un signal de synchronisation dans des périodes de radiodiffusion successives de durée Tx de période de radiodiffusion,
- un émetteur configuré pour radiodiffuser le signal de synchronisation, le signal de synchronisation étant émis pendant une fenêtre d'émission présentant une durée Dx définie au sein de chaque période de radiodiffusion, le rapport cyclique DC=Dx/Tx entre la durée de la fenêtre d'émission Dx du signal de synchronisation et la durée de la période de radiodiffusion Tx étant inférieur à 50%, la durée Tx de la période de radiodiffusion étant Tx=Tr.(1+DC),
- et un récepteur configuré pour recevoir un message de données depuis un émetteur du module de communication à la suite d'un recouvrement entre une fenêtre d'éveil du récepteur du module de communication et une dite fenêtre d'émission,
- et, le cas échéant, une interface de communication avec un réseau, configurée pour transmettre le message de données au réseau.

Dans un mode de réalisation, l'invention fournit un module de communication apte à transmettre des données à une passerelle, comportant :

- un récepteur,
- une horloge configurée pour déclencher périodiquement l'activation du récepteur dans des périodes d'activation pendant une fenêtre d'éveil, la durée de la fenêtre d'éveil étant inférieure à 1% de la durée Tr de la période d'activation,

le récepteur étant apte à recevoir un signal radio de synchronisation émis par une passerelle lors d'un recouvrement d'une fenêtre d'éveil avec une fenêtre d'émission d'un signal de synchronisation émis par une passerelle,

- une mémoire comportant des données à transmettre,

- un émetteur configuré pour radiodiffuser un message de données en réponse à la réception du signal radio de synchronisation par le récepteur.

Selon des modes de réalisation, le procédé décrit ci-dessus, la passerelle décrite ci-dessus et le module décrit ci-dessus peuvent comporter une ou plusieurs des caractéristiques ci-dessous.
Dans un mode de réalisation, la radiodiffusion du message de données est déclenchée après un délai de latence suivant la réception par le récepteur du module de communication du signal de synchronisation.
Grâce à ces caractéristiques, on évite des collisions entre des messages de données radiodiffusés par des modules de communication différents.
Dans un mode de réalisation, le délai de latence est inférieur à la durée de la période d'activation Tr.
Dans un mode de réalisation, le délai de latence est pseudo aléatoire au sein d'une collection de modules de communication différents. Par exemple, le délai de latence est généré en tenant compte du numéro de série du module de communication.
Dans un mode de réalisation, le rapport cyclique DC est inférieur à un seuil réglementaire.
Dans un mode de réalisation, le rapport cyclique est DC=10%.
Dans un mode de réalisation, la portée de la passerelle est supérieure à 1km.
Par exemple, des technologies telles que les technologies Long Range (LoRa) ou SIGFOX peuvent être utilisées pour l'émission radio de la passerelle. Préférentiellement, la puissance utilisée par le récepteur du module de communication est inférieure à 25mW et la puissance utilisée par un émetteur de la passerelle est inférieur à 500mW.
Dans un mode de réalisation, la passerelle est mobile géographiquement.
Grâce à ces caractéristiques, la passerelle peut récolter des données sur une surface géographique choisie.
Dans un mode de réalisation, la durée Tx de la période de radiodiffusion est comprise entre 2secondes et 30secondes, préférentiellement la durée Tx de la période de radiodiffusion est de 6,6 secondes.
Dans un mode de réalisation, le rapport cyclique DC est de 10% et la durée Tx de la période de radiodiffusion est de 6,6 secondes. Dans ce mode de réalisation, la durée de la fenêtre d'émission est donc de 0.6 secondes et la durée de la période d'activation est de 6 secondes.
Dans un mode de réalisation, la période de convergence est comprise entre 30 secondes et 2 minutes, préférentiellement la période de convergence est environ de 60 secondes.
En effet, une passerelle mobile de portée égale à 1km se déplaçant à la vitesse de 30 km/h nécessitera une durée égale à une période de convergence maximale de 2minutes plus le délai de latence afin d'effectuer le télérelevé d'un compteur d'eau, d'électricité, de gaz ou de n'importe quel appareil de mesure équipé d'un module de communication de portée égale à 1km.

Une passerelle mobile de portée égale à 1km se déplaçant à la vitesse de 120 km/h nécessitera une durée égale à une période de convergence maximale de 30 secondes plus le délai de latence afin d'effectuer le télérelevé d'un compteur d'eau, d'électricité, de gaz ou de n'importe quel appareil de mesure équipé d'un module de communication de portée égale à 1km.

Une passerelle mobile de portée égale à 1km se déplaçant à la vitesse de 30 km/h nécessitera une durée égale à une période de convergence maximale de 171 secondes plus le délai de latence afin d'effectuer le télérelevé d'un compteur d'eau, d'électricité, de gaz ou de n'importe quel appareil de mesure équipé d'un module de communication de portée égale à 700m. Pour les mêmes portées respectives de passerelle mobile (1km) et de module de communication (700m), une vitesse de la passerelle mobile de 50km/h nécessitera une durée égale à une période de convergence maximale de 103 secondes plus le délai de latence et une vitesse de la passerelle mobile de 120km/h nécessitera une durée égale à une période de convergence maximale de 43 secondes plus le délai de latence.

En effet, le module de communication reste à la portée de la passerelle pendant la période de convergence maximale, qui est la durée maximale nécessaire pour permettre au module de communication de recevoir le signal de synchronisation.

En effet, la passerelle reste à la portée du module de communication pendant une durée minimale égale au délai de latence après que le module ait reçu le signal de synchronisation, ce qui permet à la passerelle de recevoir le message de données.

Dans un mode de réalisation, la durée de la fenêtre d'éveil est comprise entre 5msec et 15msec, préférentiellement la durée de la fenêtre d'éveil est d'environ 10msec.

Dans un mode de réalisation, le récepteur du module de communication prolonge la durée d'une fenêtre d'éveil lors d'un recouvrement entre la fenêtre d'éveil et une dite fenêtre d'émission, jusqu'à la fin de la fenêtre d'émission.

Dans un mode de réalisation, le signal de synchronisation comporte un préambule, un mot de synchronisation et l'identité de la passerelle.

Dans un mode de réalisation, le module de communication comporte en outre une interface avec un appareil, l'interface étant apte à acquérir des données à enregistrer dans la mémoire. Par exemple, les données sont enregistrées périodiquement. Par exemple, la période d'enregistrement est plus de 1000 fois supérieure à la période d'activation. Par exemple, ces données sont des relevés de compteurs d'eau ou d'électricité.

L'invention fournit également un véhicule automobile comportant une passerelle décrite ci-dessus, dans lequel l'émetteur de la passerelle présente une portée de radiodiffusion d'au moins 1km.

L'invention fournit également un système de communication radio comportant une passerelle précitée et une pluralité de modules de communication précités disposés dans une zone de couverture radio de l'émetteur de la passerelle.

De préférence, l'émetteur de chaque module de communication est configuré pour radiodiffuser le message de données après un délai de latence suivant la réception par le récepteur du module de communication du signal de synchronisation, le délai de latence étant configuré dans la mémoire du module de communication.

## Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- **La figure 1** est un schéma d'une passerelle mobile effectuant un télérelevé de modules de communication de compteurs d'eau d'un village.

- **La figure 2** est un schéma d'une passerelle fixe effectuant un télérelevé de modules de communication de compteurs d'eau d'un quartier d'une ville.

- **La figure 3** est un schéma d'une passerelle et d'un module de communication échangeant des données.

- **La figure 4** est un schéma d'émission de synchronisation par la passerelle de la figure 3 et de réponse d'un module de communication de la figure 3.

- **La figure 5** est un schéma montrant l'émission périodique d'un signal de synchronisation par la passerelle et l'ouverture périodique de fenêtre d'écoute par un premier module de communication, et par un second module de communication.

- **La figure 6** est le schéma de la figure 5 pour un second module de communication.

- **La figure 7** est un schéma agrandi de l'émission périodique d'un signal de synchronisation.

## Description détaillée de modes de réalisation

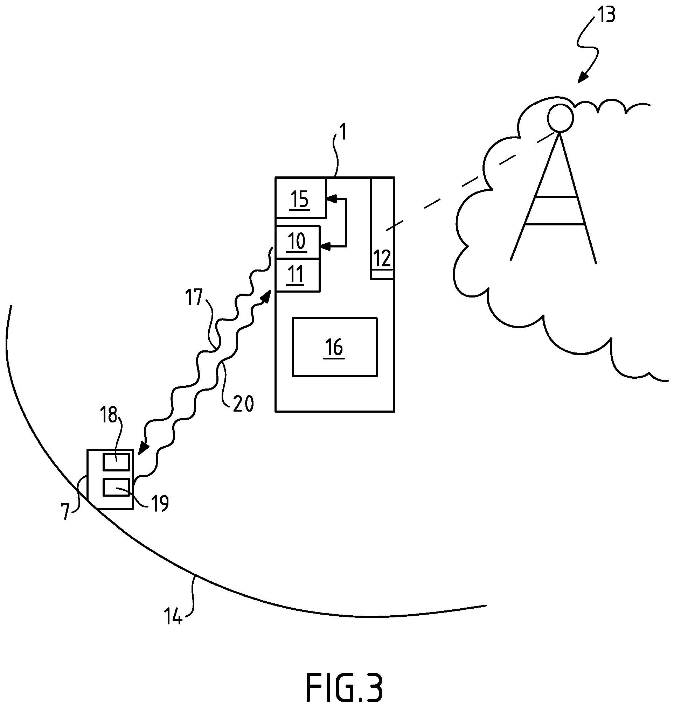

La figure 3 représente une passerelle 1 selon un mode de réalisation de l'invention. La passerelle 1 est une interface permettant la communication radio de données d'un module de communication 7 vers un réseau 13, par exemple un réseau IP local ou un réseau étendu tel que le réseau internet.

La passerelle 1 comprend une interface 12 apte à communiquer avec le réseau 13. Ainsi, des données radio échangées avec un module de communication 7 peuvent être transmises au réseau 13.

La passerelle 1 comprend un émetteur 10 et un récepteur 11 aptes à émettre et recevoir des ondes radio vers et en provenance de modules de communication 7.

L'émetteur 10 et le récepteur 11 comportent au moins une antenne destinée à rayonner ou à capter les ondes radio véhiculant les données à échanger avec les modules de communication 7 dans une portée 14 de rayon d'un kilomètre via un canal de transmission radio.

L'émetteur 10 et le récepteur 11 comportent également, de façon connue en soit, des moyens de traitement analogique et numériques des ondes radio dans le canal de transmission radio.

La passerelle 1 comprend une horloge 15 apte à déclencher périodiquement l'envoi d'un signal de synchronisation 17 lors de périodes de radiodiffusion successives. La durée d'une période de radiodiffusion est configurée pour être Tx=6.6 secondes.

Le récepteur 11 est actif en continu. L'émetteur 10 est configuré pour n'être actif que lors de fenêtres d'émission.

Pour des raisons réglementaires d'occupation du canal de transmission radio, le rapport cyclique, également appelé en anglais « duty cycle » DC maximal autorisé est de 10%. Le rapport cyclique est défini comme le rapport entre une durée de signal émis et une durée de période de radiodiffusion.

Ainsi, l'émetteur 10 est configuré pour émettre périodiquement des signaux de synchronisation 17 de durée de fenêtre d'émission Dx=0.6 seconde pour respecter DC=Dx/Tx.

Le signal de synchronisation comporte un mot de synchronisation, également appelé en anglais « SyncWord », et un message court de données comportant l'identité de la passerelle 1.

La durée d'une fenêtre d'émission est réglable en précédant le mot de synchronisation par un préambule de longueur réglable.

La passerelle comporte également des moyens de traitement du signal et de contrôle qui ne sont ni représentés ni décrits.

Enfin, la passerelle 1 comporte une batterie 16 permettant de l'alimenter.

Un module de communication 7 est également décrit sur la figure 3. Le module de communication 7 comporte un récepteur 18.

Le module de communication 7 comporte également une horloge (non représentée) configurée pour déclencher périodiquement l'activation du récepteur 18 dans des périodes d'activation de durée Tr= 6s pendant une fenêtre d'éveil de 10 ms.

Le récepteur 18 est configuré pour recevoir le signal de synchronisation 17 lors d'un recouvrement d'une fenêtre d'éveil avec une fenêtre d'émission du signal de synchronisation 17 émis par une passerelle 1.

Le module de communication comporte également un émetteur 19 apte à radiodiffuser un message de données 20 en réponse à la réception du signal de synchronisation 17.

L'émetteur 19 est configuré afin que la radiodiffusion du message de données 20 soit déclenchée après un délai de latence Δ suivant la réception effective par le récepteur 18 du module de communication 7 du signal de synchronisation 17.

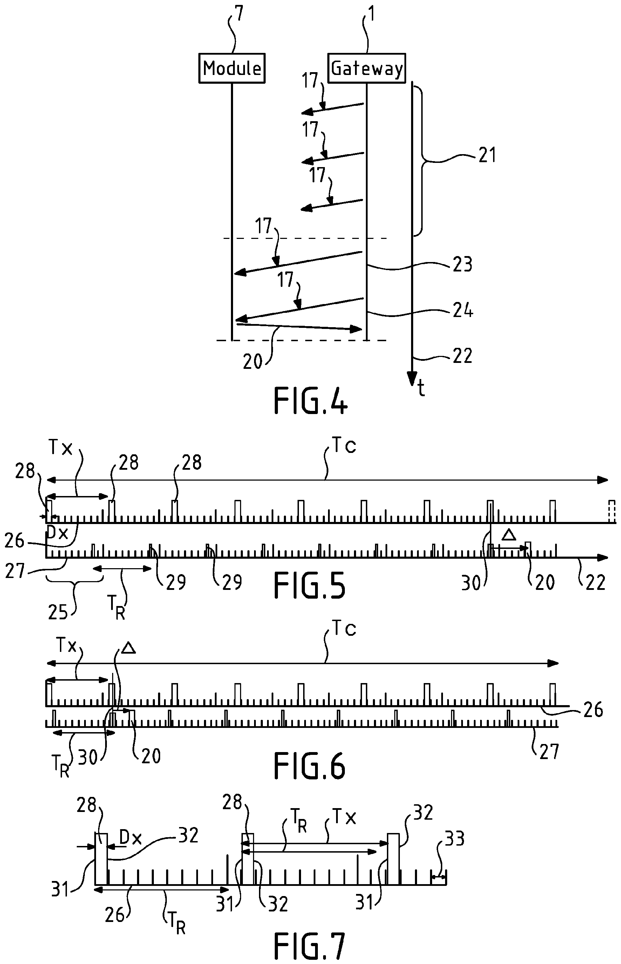

La figure 4 représente la transmission périodique du signal de synchronisation 17 par la passerelle 1.

Dans le cas où la passerelle 1 est mobile, le module de communication 7 peut se trouver hors de la portée 14 de la passerelle 1. C'est ce qui est représenté sur l'axe du temps 22 par la durée 21 : le signal de synchronisation 17 n'atteint pas la cible du module de communication 7 et aucune communication de données n'est effectuée entre la passerelle 1 et le module de communication 7.

La passerelle 1 mobile s'approchant du module de communication 7, le module de communication 7 est maintenant dans la portée 14.

Le récepteur 18 du module de communication 7 peut donc recevoir le signal de synchronisation 17 de la passerelle 1. Cependant, le récepteur 18 du module de communication 7 n'est pas actif en continu mais seulement pendant des fenêtres d'éveil.

Le signal de synchronisation 17 arrivé au moment 23 n'est donc pas lu par le récepteur 18 qui est inactif.

Lors du moment 24, le récepteur 18 est en éveil. Il y a donc recouvrement de la fenêtre d'éveil et de la fenêtre d'émission.

Ainsi, le récepteur 18 du module de communication 7 reçoit effectivement le signal de synchronisation 17 de la passerelle 1.

Le module de communication 7 est configuré pour que, lors de la réception d'un signal de synchronisation 17, la fenêtre d'éveil soit prolongée.

Ainsi, le module de communication 7 peut lire le mot de synchronisation contenu dans le signal de synchronisation 17, ainsi que l'identité de la passerelle 1, et répondre en transmettant le message 20 de données.

La figure 5 illustre plus précisément le recouvrement d'une fenêtre d'éveil avec une fenêtre d'émission pour un premier module de communication 7, tandis que la figure 6 illustre le recouvrement d'une fenêtre d'éveil avec une fenêtre d'émission pour un second module de communication 7.

Sur les figures 5 et 6, l'axe des temps 22 est découpé en périodes élémentaires 25 de durée fixe.

Pour des raisons de représentation, la durée de la période élémentaire a été choisie égale à celle de la période d'activation Tr.

La première grille de temps 26 et la seconde grille de temps 27 sont à la même échelle et représentent respectivement les événements arrivant à l'émetteur 10 de la passerelle 1 et au récepteur 18 du module de communication 7.

Notamment, la première grille de temps 26 montre la succession périodique de fenêtres d'émission 28 de signal de synchronisation 17, dans chaque période de radiodiffusion de durée Tx.

La second grille de temps 27 montre la succession périodique de fenêtres d'éveil 29 du récepteur 18 du module de communication 7, dans chaque période d'activation de durée Tr.

Sur les figures 5 et 6, on observe que les horloges du module de communication 7 et de la passerelle 1 ne sont pas synchronisées. En effet, les premières fenêtres d'émission 28 et d'éveil 29 ne se recouvrent pas.

Comme nous allons le voir, les horloges du module de communication 7 et de la passerelle 1 n'ont pas besoin d'être synchronisées pour qu'un recouvrement des fenêtres d'émission 28 et d'éveil 29 advienne dans une durée maximale déterminée appelée durée de convergence Tc.

En effet, la durée Tr de la période d'activation est égale par conception à :

$$Tr=Tx/(1+DC).$$

Grâce à ce choix, la durée de convergence maximale Tc est égale à :

$$Tc=Tr.DC^{-1}$$

Ainsi, on peut, par conception, choisir une durée de convergence Tc en imposant une durée Tr de période d'activation choisie pour un rapport cyclique DC donné.

Ici, le rapport cyclique étant égal à DC=10%, la durée de convergence Tc est donc égale à 10 fois la durée Tr de la période d'activation. Pour une durée Tr=6s, la durée de convergence Tc est donc égale à une minute.

Ainsi, à l'issue de 10 périodes d'activations successives, il est certain qu'un recouvrement entre une fenêtre d'éveil 29 et une fenêtre d'émission 28 adviendra.

Sur l'exemple de la figure 5, ce recouvrement 30 advient à la 8ème période d'activation représentée. Sur l'exemple de la figure 6, ce recouvrement 30 advient à la 2ème période d'activation représentée.

Comme représenté, l'émetteur 19 du module de communication 7 émet alors le message de donnée 20 après une durée de latence Δ préconfigurée ou aléatoire.

Ainsi, plusieurs modules de communication 7 peuvent émettre des messages de données 20 vers la même passerelle 1, car la désynchronisation des périodes d'éveil 29 des modules de communication 7 et l'envoi du message de donnée 20 après une durée de latence Δ différente d'un module de communication à l'autre permettent de minimiser les risques que deux message de donnée 20 provenant de deux modules de communication différents arrivent simultanément sur le récepteur 10 de la passerelle 1.

La figure 7 montre un aspect important de l'invention. La grille de temps 26 est représentée agrandie pour les besoin de l'illustration. Comme représenté, chaque fenêtre d'émission 28 présente un début 31 et une fin 32. Chaque fenêtre d'émission 28 présente une durée Dx. Chaque début 31 d'une fenêtre d'émission 28 est séparé du début 31 d'une fenêtre d'émission 28 suivante par la durée de la période de radiodiffusion Tx.

La durée de la période de radiodiffusion Tx est égale à la somme de la durée de la période d'activation Tr et de la durée Dx de la fenêtre d'émission 28. Ainsi, le début 31 d'une fenêtre d'émission 28 est décalé de la durée Dx du début 31 d'une fenêtre d'émission 28 suivante.

La période d'activation peut être découpée en un nombre N de créneaux élémentaires 33 successifs. Pour un nombre N égal à DC$^{-1}$, la durée d'un créneau élémentaire 33 est égale à la durée Dx de la fenêtre d'émission 28.

Après un nombre N-1 de périodes d'activation égal au nombre de créneaux élémentaires 33 mois un créneau élémentaire, chacun des créneaux élémentaires successifs 33 de la période d'activation a donc été recouvert par une fenêtre d'émission 28.

Ainsi, une fenêtre d'éveil 29, peu importe sa durée et sa date de début dans une période d'activation, sera forcément recouverte par une fenêtre d'émission 28 après un nombre N-1 de périodes d'activation.

Ainsi, la communication de données entre un module de communication 7 et une passerelle 1 est possible, tout en ayant des durées de fenêtres d'éveil 29 et d'émission 28 très courtes afin d'économiser la batterie du module de communication 7 et de la passerelle 1.

Il est important de noter que la diminution de la durée Tr de la période d'activation peut entraîner une diminution de la durée de vie des batteries du module de communication 7 et de la passerelle 1.

Par ailleurs, une durée Tr de la période d'activation choisie trop courte peut amener à une congestion dans la passerelle 1 des messages de données 20 provenant des modules de communication 7 dans le cas d'un réseau de modules de communication 7 dense.

Il faut donc chercher un compromis tenant notamment compte des contraintes réglementaires.

Pour une valeur de rapport cyclique réglementaire de 10%, les durées numériques citées dans les exemples des figures ci-dessus sont satisfaisantes.

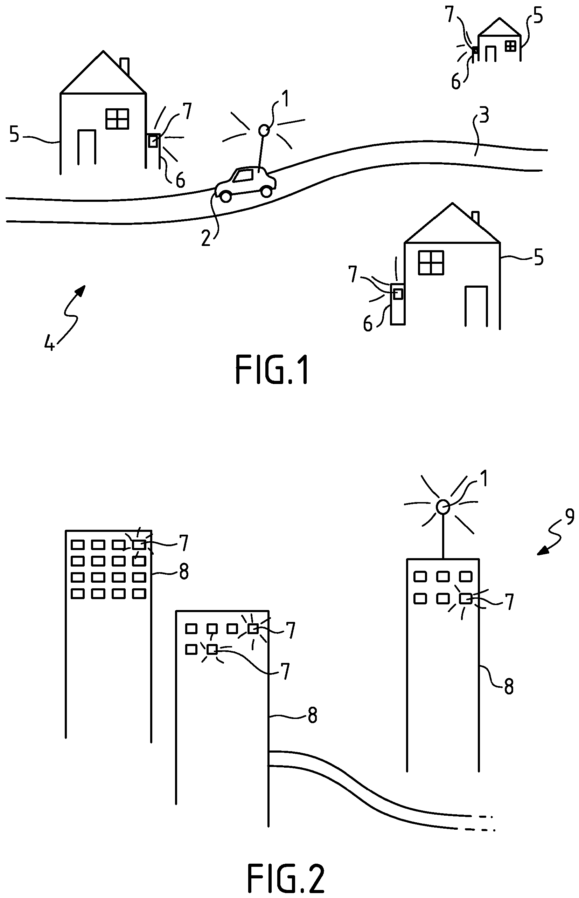

Les figures 1 et 2 vont illustrer une utilisation avantageuse de l'invention.

La figure 1 représente un village 4 dans lequel se trouvent quelques maisons 5. Chacune de ces maisons 5 est équipée d'un compteur d'eau 6.

Auparavant, un employé de l'entreprise délivrant l'eau aux maisons 5 devait se rendre régulièrement en personne pour relever les indices de la consommation d'eau indiqués sur les compteurs d'eau 6.

Grâce à l'invention, la télétransmission des indices de la consommation d'eau de chaque maison 5 est rendue possible.

Un mode de réalisation de l'invention fournit à cet effet une passerelle 1 embarquée sur une voiture 2. La passerelle 1 permet de communiquer par ondes radio dans un rayon d'un kilomètre.

Chaque compteur d'eau 6 est équipé d'un module de communication 7 apte à communiquer par onde radio avec la passerelle 1.

Le relevé des indices de la consommation d'eau est rendu possible par la communication radio de la passerelle 1 avec la voiture 2. Elle peut ainsi relever les indices des compteurs d'eau 6 de toutes les maisons 5 se trouvant dans la portée de la passerelle 1 à chaque position de la voiture. Comme la voiture 2 est mobile sur une route 3 traversant le village 4, l'étendue de la zone géographique que peut couvrir une seule et même passerelle 1 embarquée par une voiture 2 est accrue.

Ainsi, l'invention fournit une solution pour couvrir une grande zone géographique à l'aide d'une seule et même passerelle 1.

L'invention est particulièrement avantageuse en ce qu'elle permet d'intégrer à la passerelle 1 une batterie de durée de vie de plus de 10 ans.

La figure 2 représente une ville 9 dans laquelle se trouvent des immeubles 8. Chacun des appartements de ces immeubles 8 ou de ces immeubles 8 est équipé d'un compteur d'eau 6 lui-même équipé d'un module de communication 7. Une passerelle 1 est installée sur une antenne au-dessus du toit d'un des immeubles 8 et a une portée d'un kilomètre. La télérelève de chaque compteur d'eau 6 est donc rendue possible pour tous les immeubles 8 dans la portée de la passerelle 1, similairement à la description de la figure 1.

Ainsi, l'invention fournit une solution pour couvrir une zone de forte densité de module de communication 7 à l'aide d'une seule et même passerelle.

Dans la description qui précède, les paramètres Tx, Tr et Tc sont constants.

Dans un mode de réalisation évolué, les paramètres Tx, Tr et Tc pourraient évoluer dans le temps selon un temps caractéristique supérieur à la durée de convergence Tc, de préférence supérieur à 5 fois la durée de convergence Tc.

Bien que l'invention ait été décrite en liaison avec plusieurs modes de réalisation particuliers, il est bien évident qu'elle n'y est nullement limitée et qu'elle comprend leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

**Revendications**

1. Procédé pour établir une communication entre une passerelle (1) et un module de communication (7), comportant :

   • radiodiffuser périodiquement dans des périodes de radiodiffusion successives depuis une passerelle un signal de synchronisation (17), le signal de synchronisation étant émis pendant une fenêtre d'émission (28) présentant une durée Dx définie au sein de chaque période de radiodiffusion,
   • activer périodiquement dans des périodes d'activation successives un récepteur (18) d'un module de communication (7), le récepteur étant activé pendant une fenêtre d'éveil (29) au sein de chaque période d'activation, la durée de la fenêtre d'éveil (29) étant inférieure à la durée Tr de la période d'activation,
   • recevoir le signal radio de synchronisation (17) par le récepteur (18) du module de communication (7) lors d'un recouvrement entre une dite fenêtre d'éveil (29) et une dite fenêtre d'émission (28),
   • radiodiffuser un message de données (20) depuis un émetteur (19) du module de communication (7), la radiodiffusion du message de données étant déclenchée par la réception du signal de synchronisation (17),
   • recevoir le message de données (20) par un récepteur (11) de la passerelle (1), **caractérisé en ce que** :

     • le rapport cyclique DC=Dx/Tx entre la durée de la fenêtre d'émission (28) Dx du signal de synchronisation et la durée Tx de la période de radiodiffusion est inférieur à 50%,
     • la durée Tr de la période d'activation est égale à Tr=Tx/(1+DC).

2. Procédé selon la revendication 1, dans lequel la radiodiffusion du message de données (20) est déclenchée après un délai de latence (Δ) suivant la réception par le récepteur (18) du module de communication (7) du signal de synchronisation (17).

3. Procédé selon la revendication 2, dans lequel le délai de latence (Δ) est inférieur à la durée Tr de la période d'activation.

4.  Procédé selon l'une quelconque des revendications 1 à 3, dans lequel le rapport cyclique DC est inférieur à un seuil réglementaire.

5.  Procédé selon l'une quelconque des revendications 1 à 4, dans lequel la portée (14) de radiodiffusion de la passerelle (1) est supérieure à 1km.

6.  Procédé selon l'une quelconque des revendications 1 à 5, dans lequel la passerelle (1) est mobile géographiquement.

7.  Procédé selon l'une quelconque des revendications 1 à 6, dans lequel la durée Tx de la période de radiodiffusion est comprise entre 2secondes et 30secondes.

8.  Procédé selon l'une quelconque des revendications 1 à 7, dans lequel le récepteur (19) du module de communication (7) prolonge la durée d'une fenêtre d'éveil (29) lors d'un recouvrement (30) entre la fenêtre d'éveil (29) et une dite fenêtre d'émission (28), jusqu'à la fin de la fenêtre d'émission.

9.  Passerelle (1) destinée à communiquer sans fil avec un module de communication (7) comportant un récepteur (18) présentant des fenêtres d'éveil successives répétées périodiquement avec une période de durée Tr, la passerelle comportant :

    • une horloge (16) configurée pour déclencher périodiquement une radiodiffusion d'un signal de synchronisation (17) dans des périodes de radiodiffusion successives, la période de radiodiffusion présentant une durée Tx,
    • un émetteur (10) configuré pour radiodiffuser le signal de synchronisation (17), le signal de synchronisation étant émis pendant une fenêtre d'émission (28) présentant une durée Dx définie au sein de chaque période de radiodiffusion,
    • un récepteur (11) configuré pour recevoir un message de données (20) depuis un émetteur du module de communication (7) à la suite d'un recouvrement entre une fenêtre d'éveil (29) du récepteur (18) du module de communication (7) et une dite fenêtre d'émission (28),

    **caractérisée en ce que** :

    • le rapport cyclique DC=Dx/Tx entre la durée de la fenêtre d'émission Dx du signal de synchronisation et la durée de la période de radiodiffusion Tx est inférieur à 50%, la durée Tx de la période de radiodiffusion est Tx=Tr.(1+DC).

10. Passerelle (1) selon la revendication 9, comportant en outre une interface de communication avec un réseau, configurée pour transmettre le message de données au réseau (13).

11. Véhicule automobile (2) comportant une passerelle (1) selon la revendication 9 ou 10, dans lequel l'émetteur (10) de la passerelle présente une portée (14) de radiodiffusion supérieure à 1km.

12. Système de communication radio comportant une passerelle (1) selon la revendication 9 ou 10 et une pluralité de modules de communication (7), incluant le module de communication (7) avec lequel la passerelle (1) est destinée à communiquer, disposés dans une zone de couverture radio de l'émetteur (10) de la passerelle, lesdits modules (7) étant **caractérisés en ce qu'**ils comportent :

    • un récepteur (18),
    • une horloge configurée pour déclencher périodiquement l'activation du récepteur dans des périodes d'activation pendant une fenêtre d'éveil (29), la durée de la fenêtre d'éveil étant inférieure à 1% de la durée Tr de la période d'activation,

    ledit récepteur (18) étant apte à recevoir le signal radio de synchronisation (17) radiodiffusé périodiquement par ladite passerelle (1) lors d'un recouvrement de la fenêtre d'éveil (29) avec la fenêtre d'émission (28) Dx du signal de synchronisation (17) émis par ladite passerelle (1),

    • une mémoire comportant des données à transmettre,
    • un émetteur (19) configuré pour radiodiffuser un message de données (20) vers la passerelle en réponse à la réception du signal radio de synchronisation par le récepteur.

13. Système de communication radio selon la revendication 12, dans lequel l'émetteur de chaque module de communication est configuré pour radiodiffuser le message de données (20) après un délai de latence (Δ) suivant la réception par le récepteur (18) du module de communication (7) du signal de synchronisation (17), le délai de latence (Δ) étant configuré dans la mémoire du module de communication (7).

**Patentansprüche**

1.  Verfahren zur Herstellung einer Verbindung zwischen einem Gateway (1) und einem Kommunikationsmodul (7), umfassend:

    • periodisches Aussenden eines Synchronisationssignals (17) in aufeinanderfolgenden Sendeperioden von einem Gateway, wobei das Synchronisationssignal während eines Übertragungsfensters (28) mit einer definierten Dauer Dx innerhalb jeder Sendeperiode übertragen wird,
• periodisches Aktivieren eines Empfängers (18) eines Kommunikationsmoduls (7) in aufeinanderfolgenden Aktivierungsperioden, wobei der Empfänger während der Dauer eines Aufwachfensters (29), das kürzer ist als die Dauer Tr der Aktivierungsperiode, aktiv ist,
• Empfangen des Funksynchronisationssignals (17) durch den Empfänger (18) des Kommunikationsmoduls (7) bei einer Überlappung zwischen einem solchen Aufwachfenster (29) und einem solchen Übertragungsfenster (28),
• Aussenden einer Datennachricht (20) von einem Sender (19) des Kommunikationsmoduls (7), wobei das Aussenden der Datennachricht durch den Empfang des Synchronisationssignals (17) ausgelöst wird,
• Empfangen der Datennachricht (20) durch einen Empfänger (11) des Gateways (1), **dadurch gekennzeichnet, dass**:

  • das Tastverhältnis DC=Dx/Tx zwischen der Dauer des Übertragungsfensters (28) Dx des Synchronisationssignals und der Dauer Tx der Sendeperiode weniger als 50% beträgt,
  • die Dauer Tr der Aktivierungsperiode gleich Tr=Tx/(1 +DC) ist.

2. Verfahren nach Anspruch 1, wobei die Aussendung der Datennachricht (20) nach einer Latenzzeit (Δ) nach dem Empfang des Synchronisationssignals (17) durch den Empfänger (18) des Kommunikationsmoduls (7) veranlasst wird.

3. Verfahren nach Anspruch 2, wobei die Latenzzeit (Δ) kürzer ist als die Dauer Tr der Aktivierungsperiode.

4. Verfahren nach einem der Ansprüche 1 bis 3, wobei das Tastverhältnis DC geringer ist als ein regulatorischer Schwellenwert.

5. Verfahren nach einem der Ansprüche 1 bis 4, wobei der Sendbereich (14) des Gateways (1) größer ist als 1 km.

6. Verfahren nach einem der Ansprüche 1 bis 5, wobei das Gateway (1) geographisch mobil ist.

7. Verfahren nach einem der Ansprüche 1 bis 6, wobei die Dauer Tx der Sendeperiode zwischen 2 Sekunden und 30 Sekunden beträgt.

8. Verfahren nach einem der Ansprüche 1 bis 7, wobei der Empfänger (19) des Kommunikationsmoduls (7) die Dauer eines Aufwachfensters (29) bei einer Überlappung (30) zwischen dem Aufwachfenster (29) und einem besagten Übertragungsfenster (28) bis zum Ende des Übertragungsfensters verlängert.

9. Gateway (1) zur drahtlosen Kommunikation mit einem Kommunikationsmodul (7), das einen Empfänger (18) mit aufeinanderfolgenden Aufwachfenstern umfasst, die periodisch mit einer Zeitdauer Tr wiederholt werden, wobei das Gateway umfasst:

  • einen Taktgeber (16), der so konfiguriert ist, dass er periodisch ein Aussenden eines Synchronisationssignals (17) in aufeinanderfolgenden Sendeperioden veranlasst, wobei die Sendeperiode eine Dauer Tx hat,
  • einen Sender (10), der konfiguriert ist für das Senden des Synchronisationssignals (17), wobei das Synchronisationssignal während eines Sendefensters (28) gesendet wird, das eine Dauer Dx aufweist, die innerhalb jeder Sendeperiode definiert ist,
  • einen Empfänger (11), der konfiguriert ist für den Empfang einer Datennachricht (20) von einem Sender des Kommunikationsmoduls (7) als Folge einer Überlappung zwischen einem Aufwachfenster (29) des Empfängers (18) des Kommunikationsmoduls (7) und einem besagten Sendefenster (28),

**dadurch gekennzeichnet, dass**:

  • das Tastverhältnis DC=Dx/Tx zwischen der Dauer des Übertragungsfensters (28) Dx des Synchronisationssignals und der Sendedauer Tx weniger als 50% beträgt und die Sendedauer Tx gleich Tr=Tx.(1+DC) ist.

10. Gateway (1) nach Anspruch 9, ferner umfassend eine Kommunikationsschnittstelle mit einem Netzwerk, die konfiguriert ist für die Übertragung der Datennachricht an das Netzwerk (13).

11. Kraftfahrzeug (2) mit einem Gateway (1) nach Anspruch 9 oder 10, wobei der Sender (10) des Gateways (1) eine Sendereichweite (14) größer als 1 km aufweist.

12. Funkkommunikationssystem mit einem Gateway (1) nach Anspruch 9 oder 10 und mit einer Mehrzahl von Kommunikationsmodulen (7), einschließlich des Kommunikationsmoduls (7), mit welchem das Gateway (1) kommunizieren soll, die innerhalb eines Funkabdeckungsbereichs des Senders (10) des Gateways angeordnet sind, wobei die Module (7) **dadurch gekennzeichnet sind, dass** diese umfassen:

　　　• einen Empfänger (18),
　　　• einen Taktgeber, der ausgebildet ist zum periodischen Veranlassen der Aktivierung des Empfängers in Aktivierungsperioden während eines Aufwachfensters (29), wobei die Dauer des Aufwachfensters weniger als 1% der Dauer Tr der Aktivierungsperiode beträgt,
　　　wobei der Empfänger (18) geeignet ist für den Empfang des Funksynchronisationssignals (17), das bei einer Überlappung des Aufwachfensters (29) mit dem Sendefenster (28) Dx des von dem Gateway (1) gesendeten Synchronisationssignals (17) von dem Gateway (1) periodisch ausgesendet wird,
　　　• einen Speicher, der zu übertragende Daten enthält,
　　　• einen Sender (19), der ausgebildet ist, als Antwort auf den Empfang des Funksynchronisationssignals durch den Empfänger eine Datennachricht an das Gateway zu senden.

13. Funkkommunikationssystem nach Anspruch 12, wobei der Sender jedes Kommunikationsmoduls konfiguriert ist für das Senden der Datennachricht (20) nach einer Latenzzeit (Δ) nach dem Empfang des Synchronisationssignals (17) durch den Empfänger (18) des Kommunikationsmoduls (7), wobei die Latenzzeit (Δ) in dem Speicher des Kommunikationsmoduls (7) konfiguriert ist.

**Claims**

1. A method for establishing a communication between a gateway (1) and a communication module (7), comprising:

　　　• periodically radiobroadcasting in successive radiobroadcasting periods from a gateway a synchronization signal (17), the synchronization signal being emitted during an emission window (28) exhibiting a defined duration Dx within each radiobroadcasting period,
　　　• periodically activating in successive activation periods a receiver (18) of a communication module (7), the receiver being activated during an awake window (29) within each activation period, the duration of the awake window (29) being less than the duration Tr of the activation period,
　　　• receiving the synchronization radio signal (17) by the receiver (18) of the communication module (7) during an overlap between a said awake window (29) and a said emission window (28),
　　　• radiobroadcasting a data message (20) from an emitter (19) of the communication module (7), the radiobroadcasting of the data message being triggered by the reception of the synchronization signal (17),
　　　• receiving the data message (20) by a receiver (11) of the gateway (1),

**characterized in that**:

　　　• the duty cycle DC=Dx/Tx between the duration of the emission window (28) Dx of the synchronization signal and the duration Tx of the radiobroadcasting period is less than 50%,
　　　• the duration Tr of the activation period is equal to Tr=Tx/(1+DC).

2. The method as claimed in claim 1, in which the radiobroadcasting of the data message (20) is triggered after a latency lag (Δ) following the reception by the receiver (18) of the communication module (7) of the synchronization signal (17).

3. The method as claimed in claim 2, in which the latency lag (Δ) is less than the duration Tr of the activation period.

4. The method as claimed in any one of claims 1 to 3, in which the duty cycle DC is less than a regulatory threshold.

5. The method as claimed in any one of claims 1 to 4, in which the radiobroadcasting range (14) of the gateway (1) is greater than 1km.

6. The method as claimed in any one of claims 1 to 5, in which the gateway (1) is geographically mobile.

7. The method as claimed in any one of claims 1 to 6, in which the duration Tx of the radiobroadcasting period is between 2 seconds and 30 seconds.

8. The method as claimed in any one of claims 1 to 7, in which the receiver (19) of the communication module (7) prolongs the duration of an awake window (29) during an overlap (30) between the awake window (29) and a said emission window (28), until the end of the emission window.

9. A gateway (1) intended to communicate wirelessly with a communication module (7) comprising a receiver (18) exhibiting successive awake windows periodically repeated with a period of duration Tr, the gateway comprising:

　　　• a clock (16) configured to periodically trigger a radiobroadcasting of a synchronization signal (17) in successive radiobroadcasting periods, the radiobroadcasting period exhibiting a duration Tx,
　　　• an emitter (10) configured to radiobroadcast the synchronization signal (17), the synchronization signal being emitted during an emission window (28) exhibiting a defined duration Dx within each radiobroadcasting period,
• a receiver (11) configured to receive a data message (20) from an emitter of the communication module (7) subsequent to an overlap between an awake window (29) of the receiver (18) of the communication module (7) and a said emission window (28),

**characterized in that**:

• the duty cycle DC=Dx/Tx between the duration of the emission window Dx of the synchronization signal and the duration of the radiobroadcasting period Tx is less than 50%, the duration Tx of the radiobroadcasting period is Tx=Tr.(1+DC).

10. The gateway (1) as claimed in claim 9, furthermore comprising a communication interface with a network, configured to transmit the data message to the network (13).

11. An automotive vehicle (2) comprising a gateway (1) as claimed in claim 9 or 10, in which the emitter (10) of the gateway exhibits a radiobroadcasting range (14) of greater than 1km.

12. A radio communication system comprising a gateway (1) as claimed in claim 9 or 10 and a plurality of communication modules (7) including the communication module (7) with which the gateway (1) is aimed at communicating
disposed in a zone of radio coverage of the emitter (10) of the gateway, said modules being **characterized in that** they comprise :

• a receiver (18)
• a clock configured to periodically trigger the activation of the receiver in activation periods during an awake window (29), the duration of the awake window being less than 1% of the duration Tr of the activation period

said receiver being able to receive the synchronization radio signal (17) periodically emitted by the gateway (1) during an overlap of an awake window (29) with an emission window (28) Dx of the synchronization signal (17) emitted by the gateway (1)

• a memory comprising data to be transmitted
• an emitter (19) configured to radiobroadcast a data message (20) to the gateway in response to the synchronization signal by the receiver.

13. The radio communication system as claimed in claim 12, in which the emitter of each communication module is configured to radiobroadcast the data message (20) after a latency lag ($\Delta$) following the reception by the receiver (18) of the communication module (7) of the synchronization signal (17), the latency lag ($\Delta$) being configured in the memory of the communication module (7).

FIG.1

FIG.2

FIG.3

FIG.4

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090225811 A